# EUROPÄISCHE PATENTSCHRIFT

(11) **EP 0 364 695 B1**
(45) Veröffentlichungstag und Bekanntmachung des Hinweises auf die Patenterteilung: **13.01.1993**
(21) Anmeldenummer: 89115349.6
(22) Anmeldetag: 19.08.1989
(51) Int. Cl.: B60D 1/06

(54) **Anhängerkupplung**
Trailer hitch
Attelage de remorque

(30) Priorität: 09.09.1988 DE 8811433 U
(43) Veröffentlichungstag der Anmeldung: 25.04.1990
(73) Patentinhaber: AL-KO KOBER AG, D-89359 Kötz (DE)
(72) Erfinder: Kober, Herbert, D-8871 Kötz 2 (DE); Wöhrle, Rudolf, D-8873 Ichenhausen/Rieden (DE); Werdich, Anton, D-8878 Bibertal/OT Anhofen (DE); Köhler, Robert, D-8877 Burtenbach (DE)
(74) Vertreter: Ernicke, Hans-Dieter, Dipl.-Ing.

(56) Entgegenhaltungen:
- FR-A- 1 488 479
- GB-A- 912 217
- US-A- 3 858 907
- US-A- 4 209 184
- US-A- 4 271 401
- US-A- 4 593 264

## Beschreibung

Die Erfindung betrifft eine Anhängerkupplung, insbesondere eine Kugelkopfkupplung mit den Merkmalen im Oberbegriff des Hauptanspruchs.

Bei Anhängerkupplungen, speziell Kugelkopfkupplungen, besteht das Problem, daß das Kupplungsgehäuse beim Ankuppeln manchmal nicht richtig und von der Bedienungsperson unbemerkt auf dem Kugelkopf des Zugfahrzeuges eingehängt wird. Das Kupplungsgehäuse liegt dann nur lose auf dem Kugelkopf auf. Die Kupplung kann sich während der Fahrt lösen, was häufig zu Unfällen führt.

Eine Einrastanzeige entsprechend den Merkmalen des Oberbegriffs des Hauptanspruchs ist aus der US-C-4 271 401 bekannt. Es handelt sich hierbei um mehrere elektrische Kontaktschalter, die in gegenseitiger Abhängigkeit geschaltet sind. Zwei dieser Schalter werden durch die bewegliche Pfanne der Kupplungsmechanik betätigt. Weitere Schalter sind mit der Abreißsicherung verbunden. Ist die Kupplung nicht korrekt eingerastet, wird über die Schalter ein elektrisches Signal abgegeben und ein Alarm, insbesondere eine Sirene, ausgelöst. Die vorbekannte Kupplung benötigt eine aufwendige Steuerschaltung und eine elektrische Stromversorgung vom Zugfahrzeug. Die Einrastanzeige funktioniert nur, wenn das Stromkabel des Anhängers am Zugfahrzeug eingesteckt ist.

Die GB-C-912 217 zeigt eine Anhängerkupplung, die sich nur bei einem korrekten Sitz des Kugelkopfes in der Kalotte des Kupplungskopfes verriegeln läßt. Hierfür ist ein federbelasteter Sperrstift vorgesehen, der mit der aus zwei Schwenkhebeln bestehenden Schließmechanik verbunden ist. Solange der Kugelkopf nicht korrekt eingerastet ist, hemmt der Sperrstift die Schließmechanik. Erst in der korrekten Einraststellung schiebt der Kugelkopf den Sperrstift zurück, wodurch die Schließmechanik freigeben wird.

Es ist daher Aufgabe der vorliegenden Erfindung, eine Kontrollmöglichkeit für das korrekte Einrasten der Kupplung aufzuzeigen, die geringen Bauaufwand erfordert, sowie eine hohe Betriebssicherheit und Anzeigegenauigkeit besitzt.

Die Erfindung löst diese Aufgabe mit einer in das Kupplungsgehäuse integrierten Einrastanzeige, bestehend aus einer zur Kalotte offenen Bohrung mit einem federbelasteten mechanischen Signalstift. Wenn die Kalotte den Kupplungskopf, speziell einen Kugelkopf, unter dichter Anlage umgreift, wird die Einrastanzeige betätigt. Dies geschieht erst, wenn Kupplungskopf und Kalotte soweit angenähert sind, daß ein sicheres Einrasten gewährleistet ist.

Der Signalstift kann unterschiedlich ausgebildet sein. In der Ausführungsform als mechanische oder mechanisch/elektrische Einrastanzeige ist ein federbelasteter Anzeigestift vorgesehen, der beim Einrasten vom Kupplungskopf durch das Kupplungsgehäuse nach außen gedrückt wird und die Einraststellung durch eine dann erst sichtbare Anzeigefläche bestätigt.

Für die Betriebssicherheit ist es besonders wichtig, daß der Anzeigestift bei geöffneter Kupplung nicht über das Kupplungsgehäuse nach außen vorsteht. Es bestünde sonst die Gefahr, daß er an der exponierten Anhängerkupplung beim Rangieren abgeschert wird. Der erfindungsgemäße Anzeigestift tritt erst bei eingerasteter Kupplung, wenn keine Abschergefahr mehr besteht, aus dem Kupplungsgehäuse.

Um die Einraststellung besonders deutlich optisch anzuzeigen, kann neben die mechanische Anzeige eine Leuchtanzeige treten. Hierbei kann eine Lampe direkt in das Kupplungsgehäuse integriert sein. Es ist aber auch eine Verbindung zur Lichtanlage des Zugfahrzeuges möglich, wobei die Einraststellung dem Fahrer über eine Kontrolleuchte im Armaturenbrett mitgeteilt wird. Zur Signalerzeugung kann einerseits am mechanischen Anzeigestift eine elektrische Kontaktfläche vorgesehen sein.

In den Unteransprüchen sind weitere vorteilhafte Ausgestaltungen der Einrastanzeige angegeben.

Die Erfindung ist in den Zeichnungen beispielsweise und schematisch dargestellt. Im einzelnen zeigen:
Fig. 1 und 2: im Längsschnitt eine Anhängerkupplung mit einer mechanischen Einrastanzeige in geöffneter und geschlossener Stellung und
Fig. 3: eine Anhängerkupplung mit einer elektrischen Einrastanzeige.

In den Zeichnungen ist jeweils der vordere Abschnitt einer Anhängerkupplung (1), hier einer Kugelkopf-Kupplung dargestellt. Sie besteht aus einen mit der Anhängerdeichsel verbundenen Kupplungsgehäuse (3), das mit einer innenliegenden Kalotte (4) den Kupplungskopf, hier einen Kugelkopf (6), umgreift. Der Kugelkopf (6) ist über den Kupplungshals mit dem Zugfahrzeug verbunden. Das Kupplungsgehäuse (3) beinhaltet eine Kupplungsmechanik (5), die zum Ankuppeln geöffnet wird und in korrekter Einraststellung den Eingriff von Kugelkopf (6) und Kupplungsgehäuse (3) verriegelt.

Die Anhängerkupplung (1) besitzt eine Einrastanzeige (2), die der Bedienungsperson eindeutig mitteilt, ob die Kupplung korrekt eingerastet ist oder nicht. Die Einrastanzeige (2) wird erst dann betätigt, wenn die Kalotte (4) und der Kugelkopf (6) soweit im Eingriff stehen, daß die Kupplung nicht mehr ausrasten kann.

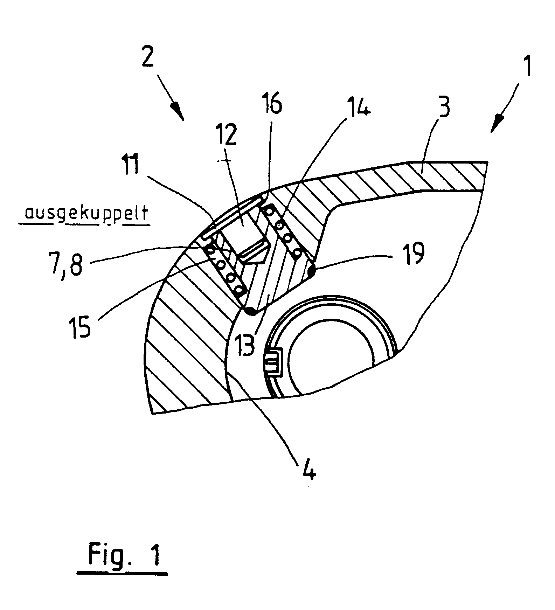

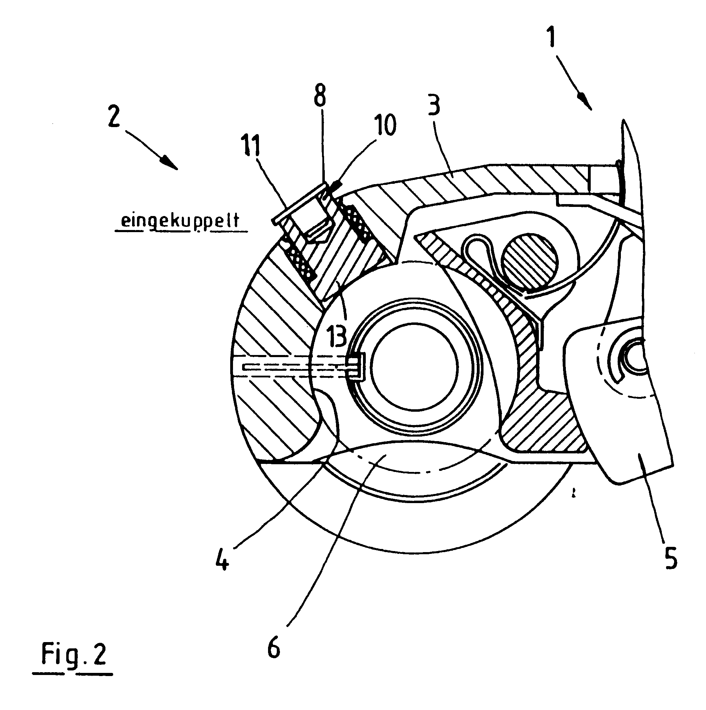

Im Ausführungsbeispiel der Figuren 1 und 2 ist eine mechanische bzw. mechanisch/elektrische Einrastanzeige dargestellt.

Fig. 1 zeigt die Anhängerkupplung (1) in offener, das heißt ausgerasteter Stellung. Die Einrastanzeige (2) besteht aus einer Bohrung (15) und einem Signalstift (7). Die Bohrung (15) und der Signalstift (7) sind vorzugsweise Zylindrisch. Die Bohrung (15) durchsetzt das Kupplungsgehäuse (3) radial und ist zur Kalotte (84), sowie nach außen offen. Die Bohrung (15) ist auf der Mittel-Längsachse des Kupplungsgehäuses (3) angeordnet und dabei in einem Winkel von ca. 55° gegen die Horizontale schräg nach vorn ausgerichtet. Sie liegt damit ergonomisch günstig im Blickwinkel der Bedienungsperson.

Der Signalstift (7) ist als federbelasteter Anzeigestift (8) ausgebildet. Er ist in der Bohrung (15) längsbeweglich geführt und ragt bei geöffneter Kupplung unter der Kraft der Feder (14) in die Kalotte (4). Er steht hierbei ca. 3 mm über die Kalottenwand (4) vor. Außenseitig schließt der Anzeigestift (8) in dieser Kupplungsstellung bündig mit der Oberfläche des Kupplungsgehäuses (3) ab oder ist versenkt angeordnet.

Bei einem Überstand von ca. 3 mm wird der Anzeigestift (8) erst dann betätigt, wenn die Kalotte (4) und der Kugelkopf (6) bereits soweit im Eingriff stehen, daß sie selbstätig nicht mehr ausrasten können. Der Anzeigestift (8) ist etwa um dieses Maß länger als die Bohrung (15) und steht bei eingerasteter Kupplung (1) entsprechend weit über das Kupplungsgehäuse (3) vor (vgl. Fig. 2). Das Maß des Überstands kann mit unterschiedlichen Bohrungsdurchmessern variieren.

Bei eingerasteter Kupplung drückt der Kugelkopf (6) gemäß Fig. 2 den Anzeigestift (8) gegen die Federkraft nach außen, wodurch dieser über das Kupplungsgehäuse (3) vortritt. Hierbei wird eine Anzeigefläche (10) am Mantel des Anzeigestiftes (8) sichtbar, die durch die geneigte Bohrungs- und Stiftanordnung beim Ankuppeln gut sichtbar ist. Um das Einrasten außer durch die Stiftstellung auch optisch auffällig und leicht verständlich mitzuteilen, ist die Anzeigefläche (10) in grüner Farbe gehalten, was korrekte Einstellung signalisiert. Demgegenüber kann auch die Deckfläche (11) des Anzeigestiftes (8) farblich gestaltet sein, beispielsweise in rot. Solange die Kupplung nicht korrekt einrastet, ist nur die rote Deckfläche (11) sichtbar, die den Bediener unmißverständlich auf die offene Kupplung hinweist.

Der unverlierbare Anzeigestift (8) besteht aus einem Schaft (13) und einer die Deckfläche bildenden Platte (11), die über einen Bolzen (12) in eine entsprechende Schachtbohrung eingepreßt ist. Die Feder (14) ist im Bohrungsbereich auf dem Schaft (14) geführt und stützt sich auf der einen Seite an einem radial vorspringenden, ringförmigen Kragen (16) in der Bohrung (15) ab. Der Kragen (16) ist nahe der Gehäuseaußenseite angeordnet. Auf der anderen Seite drückt die Feder (14) gegen das verbreiterte Ende des Schaftes (13), mit dem dieser auch in der Bohrung (15) geführt ist. Auf der anderen Seite steht die Platte (11) radial über den Schaft (13) vor und stützt sich überlappend auf den Kragen (16) ab.

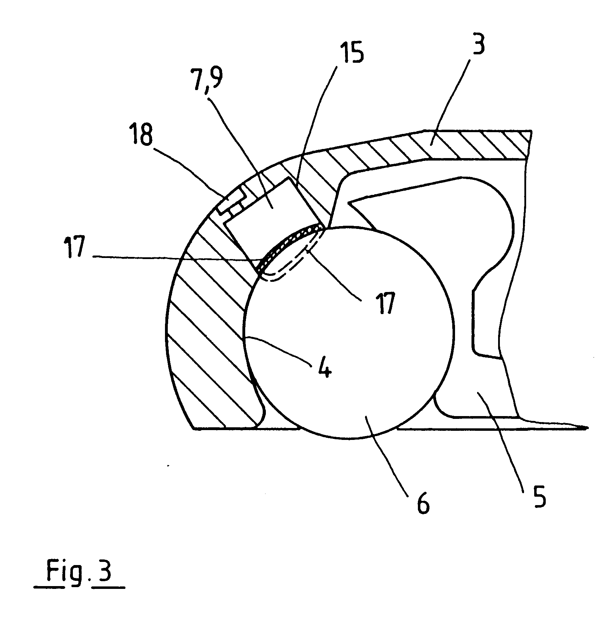

Wie Fig. 3 verdeutlicht, kann neben die mechanische Anzeige gem. Fig. 1 und 2 eine Leuchtanzeige (18) treten. Diese besteht im gezeigten Ausführungsbeispiel aus einer elektrischen Leuchte, die im vorderen Bereich des Kupplungsgehäuses (3) integriert ist. Sie wird in Einraststellung von einem Schalter betätigt. Alternativ oder zusätzlich kann auch eine elektrische Signalverbindung zur Lichtanlage des Zugfahrzeuges geschaffen werden, die beim Einstecken des Beleuchtungssteckers geschlossen wird. Im Sichtbereich des Fahrers, beispielsweise am Armaturenbrett signalisiert eine Lampe dann die korrekte Einraststellung.

Im Ausführungsbeispiel der Fig. 1 ist der Anzeigestift (8) mit einer elektrischen Kontaktfläche (19) versehen, die bei herausgedrücktem Anzeigestift (8) einen Stromkreis für die Leuchte (18) oder die Anzeige im Zugfahrzeug schließt. Bei offener Kupplung ist der Stromkreis hingegen unterbrochen.

Alternativen zu den gezeigten Ausführungsbeispielen sind in verschiedener Weise möglich. Zum einen kann statt der im Kalottenbereich verdickten Wand des Kupplungsgehäuses (3) (vgl. Fig. 1 und 2) ein nach außen ragender Gehäusekragen mit einer entsprechenden Bohrung vorgesehen sein. Dieser ist zur Vermeidung von Beschädigungen stabil ausgebildet und fest mit dem Kupplungsgehäuse verbunden. Er schützt dadurch auch den in seiner Bohrung geführten Anzeigestift. Die Leuchtanzeige (18) kann an einer beliebigen, für die Bedienungsperson beim An- und Abkuppeln einsehbaren Stelle der Anhängerkupplung angeordnet sein. Es ist dabei auch möglich, die Leuchtanzeige in den Federstift (8) zu integrieren, insbesondere in der Deckfläche (11) anzuordnen.

### STÜCKLISTE

1 Anhängerkupplung, Kugelkopf-Kupplung,
2 Einrastanzeige
3 Kupplungsgehäuse
4 Kalotte, Kalottenwand
5 Kupplungsmechanik
6 Kupplungkopf, Kugelkopf
7 Signalstift
8 Anzeigestift
9
10 Anzeigefläche
11 Deckfläche, Platte
12 Bolzen
13 Schaft
14 Feder
15 Bohrung
16 Kragen
17
18 Leuchte, Leuchtanzeige
19 elektrische Kontaktfläche

## Patentansprüche

1. Anhängerkupplung, insbesondere Kugelkopf-Kupplung, bestehend aus einem Kupplungsgehäuse (3), das mit einer Kalotte (4) den Kupplungskopf (6) umgreift, wobei das Kupplungsgehäuse (3) eine zur Kalotte (4) offene Bohrung (15) mit einem Signalstift (7) aufweist, dadurch **gekennzeichnet,** daß der Signalstift (7) als federbelasteter (14) Anzeigestift (8) ausgebildet ist, der in der das Kupplungsgehäuse (3) durchsetzenden Bohrung (15) längsbeweglich geführt ist und an seinem außenliegenden Ende eine Anzeigefläche (10) trägt.

2. Anhängerkupplung nach Anspruch 1, dadurch **gekennzeichnet,** daß der Anzeigestift (8) eine größere Länge als die Bohrung (15) aufweist und bei gelöster Kupplung nach innen in die Kalotte (4) ragt und außenseitig gegenüber der Oberfläche des Kupplungsgehäuses (3) bündig abschließt oder zurückversetzt angeordnet ist.

3. Anhängerkupplung nach Anspruch 1 oder 2, dadurch **gekennzeichnet,** daß die Feder (14) auf dem Schaft (13) des Anzeigestiftes (8) geführt und zwischen einem vorspringenden Kragen (16) in der Bohrung (15) und dem verbreiterten Schaftende eingespannt ist, wobei der Anzeigestift (8) außenseitig eine den Kragen (16) überlappende Deckplatte (11) aufweist.

4. Anhängerkupplung nach Anspruch 1 oder einem der folgenden, dadurch **gekennzeichnet,** daß die Anzeigefläche (10) am Mantel des Schaftes (13) angeordnet ist.

5. Anhängerkupplung nach Anspruch 1 oder einem der folgenden, dadurch **gekennzeichnet,** daß der Anzeigestift (8) eine elektrische Kontaktfläche (19) aufweist.

6. Anhängerkupplung nach Anspruch 5, dadurch **gekennzeichnet,** daß am Kupplungsgehäuse (3) eine Leuchte (18) angeordnet ist.

## Claims

1. Trailer coupling, in particular ballhead coupling, comprising a coupling housing (3) which encloses the coupling head (6) by means of a hollow sphere (4), the coupling housing (3) having a bore (15) open towards the hollow sphere (4) and having a signalling pin (7), characterized in that the signalling pin (7) is constructed as a spring-loaded (14) indicator pin (8) which is guided longitudinally movably in the bore (15) passing through the coupling housing (3) and carries at its outward end an indicator surface (10).

2. Trailer coupling according to Claim 1, characterized in that the indicator pin (8) has a greater length than the bore (15) and, when the coupling is released, projects inwards into the hollow sphere (4) and ends at the outside flush with respect to the surface of the coupling housing (3) or is arranged to be recessed with respect thereto.

3. Trailer coupling according to Claim 1 or 2, characterized in that the spring (14) is guided on the shaft (13) of the indicator pin (8) and is clamped between a projecting collar (16) in the bore (15) and the widened shaft end, the indicator pin (8) having on the outside a cover plate (11) overlapping the collar (16).

4. Trailer coupling according to Claim 1 or one of the subsequent claims, characterized in that the indicator surface (10) is arranged on the outer casing of the shaft (13).

5. Trailer coupling according to Claim 1 or one of the subsequent claims, characterized in that the indicator pin (8) has an electrical contact surface (19).

6. Trailer coupling according to Claim 5, characterized in that a lamp (18) is arranged on the coupling housing (3).

## Revendications

1. Attelage de remorque, notamment attelage à boule, constitué par un carter d'attelage (3), qui enserre au moyen d'une calotte (4) la tête d'attelage (6), le carter d'attelage (3) possédant un perçage (15) ouvert en direction de la calotte (4) et possédant une tige de signalisation (7), caractérisé par le fait que la tige de signalisation (7) est réalisée sous la forme d'une tige indicatrice (8) chargée par un ressort (14) et qui est déplaçable longitudinalement d'une manière guidée dans le perçage (15) traversant le carter d'attelage (3) et porte une surface indicatrice (10) au niveau de son extrémité extérieure.

2. Attelage de remorque suivant la revendication 1, caractérisé par le fait que la tige indicatrice (8) possède une longueur supérieure à celle du perçage (15) et, lorsque l'attelage est détaché, pénètre vers l'intérieur dans la calotte (4) et, sur le côté extérieur, se termine de niveau avec la surface du carter d'attelage (3) ou en étant légèrement en retrait.

3. Attelage de remorque suivant la revendication 1 ou 2, caractérisé par le fait que le ressort (14) est guidé sur le tronc (13) de la tige indicatrice (8) et est armé entre un collet saillant (16) situé à l'intérieur du perçage (15) et l'extrémité élargie du tronc de la tige, la tige indicatrice (8) possédant extérieurement une plaque de fermeture (11) qui chevauche le collet (16).

4. Attelage de remorque suivant la revendication 1 ou l'une des suivantes, caractérisé par le fait que la surface indicatrice (10) est disposée sur l'enveloppe du tronc (13).

5. Attelage de remorque suivant la revendication 1 ou l'une des suivantes, caractérisé par le fait que la tige indicatrice (8) possède une surface de contact électrique (19).

6. Attelage de remorque suivant la revendication 5, caractérisé par le fait qu'une lampe (18) est disposée sur le carter d'attelage (3).
